# EUROPÄISCHE PATENTANMELDUNG

(11) **EP 4 751 931 A1**
(43) Veröffentlichungstag der Anmeldung: **03.06.2026**
(21) Anmeldenummer: 25213179.2
(22) Anmeldetag: 04.11.2025
(51) Int. Cl.: B60C 1/00, C08L 7/00

(54) **SCHWEFELVERNETZBARE KAUTSCHUKMISCHUNG UND FAHRZEUGREIFEN**

(30) Priorität: 27.11.2024 DE 102024211344
(71) Anmelder: Continental Reifen Deutschland GmbH, 30175 Hannover (DE)
(72) Erfinder: Kallungal Abdul Jaleel, Muhamed Jesbeer, 30175 Hannover (DE); Weber, Christian, 30175 Hannover (DE); Courtois, Nicolas, 30175 Hannover (DE)
(74) Vertreter: Continental Corporation

(57) **Zusammenfassung**

Die Erfindung betrifft eine schwefelvernetzbare Kautschukmischung sowie einen Fahrzeugreifen.

Die schwefelvernetzbare Kautschukmischung enthält
- 50 bis 100 phr zumindest eines natürlichen Polyisoprens,
- 0 bis 50 phr zumindest eines weiteren Dienkautschuks,
- 10 bis 500 phr Kieselsäure und
- ein Gemisch aus mercapto-funktionalisierten Alkylalkoxysilanen und geblockten mercapto-funktionalisierten Alkylalkoxysilanen.

## Beschreibung

Die Erfindung betrifft eine schwefelvernetzbare Kautschukmischung sowie einen Fahrzeugreifen, insbesondere Fahrzeugluftreifen, mit zumindest einem Bauteil, das aus einer solchen mit Schwefel vulkanisierten Kautschukmischung besteht.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. Dabei bestehen Zielkonflikte zwischen den meisten der bekannten Reifeneigenschaften wie Nassgriffverhalten, Bremsverhalten, Handling-Verhalten, Rollwiderstand, Wintereigenschaften, Abriebverhalten und Reißeigenschaften. Es wurden bereits vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt.

Ein Füllstoff, der schon seit vielen Jahren zur Reduzierung des Rollwiderstandes von Fahrzeugreifen in Kautschukmischungen eingesetzt wird, ist Kieselsäure, auch Silica genannt. Kieselsäure wird in der Regel im Zusammenspiel mit einem Silan-Kupplungsagenz in Kautschukmischungen eingesetzt, um die Verarbeitbarkeit der Mischung zu verbessern und eine Anbindung der Kieselsäure an den umgebenden Dienkautschuk zu ermöglichen.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH2 oder -Sx- (mit x = 2-8). So können als Silan-Kupplungsagenzien z. B. 3-Mercaptopropyltriethoxysilan, 3-Thiocyanatopropyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. Die Mercaptosilane können auch in geblockter Form z. B. als 3-Octanoylthiopropyltriethoxysilan eingesetzt werden.

Um die Eigenschaften einer kieselsäurehaltigen Kautschukmischung im Hinblick auf den Zielkonflikt Rollwiderstand-Nassgriff bei Verwendung in Reifenlaufstreifen zu verbessern, wird auch vorgeschlagen, verschiedene Silantypen gleichzeitig in Mischungen einzusetzen.

So offenbart die WO2023208772A1 eine Silan enthaltende Zusammensetzung für Kautschukmischungen, die schwefelhaltige Silane, die keine (freie) Mercapto-Funktion (HS-) aufweisen, organische Verbindungen mit (freier) Mercapto (HS-)-Funktionalität und mindestens eine Säure aufweist.

Die US2023106817A1 beschreibt eine kieselsäurehaltige Kautschukzusammensetzung z. B. für Reifenlaufstreifen, die mindestens ein Polymer auf Dienbasis, gefällte Kieselsäure; mindestens ein Silan-Kupplungsagens, umfassend ein mercaptofunktionelles Alkylalkoxysilan und ein blockiertes mercaptofunktionelles Alkylalkoxysilan, mindestens ein Deblockierungsmittel, ein Vulkanisationspaket, bestehend aus mindestens einem Vulkanisationsmittel, umfassend Schwefel und mindestens einen Beschleuniger wie z. B. TBzTD, und weitere Substanzen enthält. Derartige Silan-Kupplungsagens, umfassend ein mercaptofunktionelles Alkylalkoxysilan und ein blockiertes mercaptofunktionelles Alkylalkoxysilan, sind z. B. unter dem Namen NXT^{™} P97 von der Firma Momentive erhältlich.

Der vorliegenden Erfindung liegt nun die Aufgabe zugrunde, eine Kautschukmischung bereitzustellen, die eine Verbesserung im Eigenschaftsprofil umfassend Rollwiderstand und Rissbeständigkeit bei Verwendung in Fahrzeugreifen aufweist.

Gelöst wird diese Aufgabe durch eine schwefelvernetzbare Kautschukmischung, enthaltend
- 50 bis 100 phr zumindest eines natürlichen Polyisoprens,
- 0 bis 50 phr zumindest eines weiteren Dienkautschuks,
- 10 bis 500 phr Kieselsäure und
- ein Gemisch aus mercapto-funktionalisierten Alkylalkoxysilanen und geblockten mercapto-funktionalisierten Alkylalkoxysilanen.

Überraschenderweise hat sich herausgestellt, dass mit der Kombination von einem Gemisch spezieller mercapto-funktionalisierter Alkylalkoxysilane mit einem hohen Anteil an natürlichem Polyisopren in der kieselsäurehaltigen Mischung die Vulkanisateigenschaften in der Hinsicht verbessert werden können, dass es beim Einsatz in Fahrzeugreifen zu einer Verbesserung sowohl des Rollwiderstandes als auch der Rissbeständigkeit kommt.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen festen Kautschuke bezogen.

Erfindungsgemäß enthält Kautschukmischung 50 bis 100 phr zumindest eines natürlichen Polyisoprens. Natürliches Polyisopren wird verstanden als Kautschuk, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann. Unter natürlichem Polyisopren (NR) wird nicht synthetisches Polyisopren verstanden. Es können auch natürliche Polyisoprene aus verschiedenen Quellen im Gemisch in der Kautschukmischung eingesetzt werden.

Die Kautschukmischung kann bis zu 50 phr zumindest eines weiteren Dienkautschuks enthalten. Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der bzw. die weitere(n) Dienkautschuk(e) ist bzw. sind dabei bevorzugt ausgewählt aus der Gruppe bestehend aus synthetischem Polyisopren (IR), epoxidiertem Polyisopren (ENR), Butadien-Kautschuk (BR), Butadien-Isopren-Kautschuk, Styrol-Butadien-Kautschuk (SBR), insbesondere lösungspolymerisiertem Styrol-Butadien-Kautschuk (SSBR) und emulsionspolymerisiertem Styrol-Butadien-Kautschuk (ESBR), Styrol-Isopren-Kautschuk, Flüssigkautschuken mit einem Molekulargewicht Mw von größer als 20000 g/mol, Halobutyl-Kautschuk, Polynorbornen, Isopren-Isobutylen-Copolymer, Ethylen-Propylen-Dien-Kautschuk, Nitril-Kautschuk, Chloropren-Kautschuk, Acrylat-Kautschuk, Fluor-Kautschuk, Silikon-Kautschuk, Polysulfid-Kautschuk, Epichlorhydrin-Kautschuk, Styrol-Isopren-Butadien-Terpolymer, hydriertem Acrylnitrilbutadien-Kautschuk und hydriertem Styrol-Butadien-Kautschuk.

Vorzugsweise enthält die Kautschukmischung 60 bis 90 phr zumindest eines natürlichen Polyisoprens und 10 bis 40 phr zumindest eines weiteren Dienkautschuks.

Gemäß einer besonders bevorzugten Ausführungsform der Erfindung ist bzw. sind der bzw. die Dienkautschuk(e) ausgewählt aus der Gruppe bestehend aus synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR). Eine derartige Kautschukmischung ist insbesondere für den Laufstreifen von Fahrzeugreifen geeignet.

Als Butadienkautschuk (Polybutadien, BR) können alle dem Fachmann bekannten Typen eingesetzt werden, sowohl high-cis- als auch low-cis-Typen. Die Butadienkautschuke können auch in funktionalisierter Form eingesetzt werden. Die Butadienkautschuke können dabei mit unterschiedlichsten Funktionalisierungen endgruppenmodifiziert und/oder entlang der Polymerketten funktionalisiert sein. Bei der Funktionalisierung kann es sich um solche mit Hydroxy-Gruppen und/oder Ethoxy-Gruppen und/oder Epoxy-Gruppen und/oder Siloxan-Gruppen und/oder Aminosiloxan- und/oder Carboxy-Gruppen und/oder Silan-Sulfid-Gruppen handeln. Es kommen aber auch weitere, der fachkundigen Person bekannte Modifizierungen bzw. Funktionalisierungen in Frage. Es können auch unterschiedlichen Funktionalisierungen an beiden Kettenenden vorgesehen sein. Bestandteil der Funktionalisierungen können auch Metallatome sein. Es können unterschiedliche Butadienkautschuke im Verschnitt eingesetzt werden.

Sind in der Kautschukmischung lösungspolymerisierte Styrol-ButadienKautschuke (SSBR) vorhanden, können diese mit unterschiedlichsten Funktionalisierungen (Modifizierungen), endgruppenmodifiziert und/oder entlang der Polymerketten funktionalisiert sein. Bei der Funktionalisierung kann es sich um solche mit Hydroxy-Gruppen und/oder Ethoxy-Gruppen und/oder Epoxy-Gruppen und/oder Siloxan-Gruppen und/oder Aminosiloxan- und/oder Carboxy-Gruppen und/oder Silan-Sulfid-Gruppen handeln. Es kommen aber auch weitere, der fachkundigen Person bekannte Modifizierungen bzw. Funktionalisierungen in Frage. Es können auch unterschiedlichen Funktionalisierungen an beiden Kettenenden vorgesehen sein. Bestandteil der Funktionalisierungen können auch Metallatome sein.

Die erfindungsgemäße Kautschukmischung enthält 10 bis 500 phr, bevorzugt 50 bis 200 phr, Kieselsäure, um eine gute Verarbeitbarkeit bei guten Reifeneigenschaften zu erzielen.

Die einsetzbaren Kieselsäuren können auf unterschiedlichsten Kieselsäuren basieren, die beispielsweise durch Fällung aus flüssiger Phase oder pyrogen oder aus Reisschalen-Asche ("rice husk ash silica" (RHAS)) hergestellt werden. Vorzugsweise wird eine gefällte Kieselsäure eingesetzt.

Es können unterschiedlichste Kieselsäuren, wie "low surface area" oder hoch dispergierbare Kieselsäure, auch im Gemisch, zum Einsatz kommen. Besonders bevorzugt ist es, wenn eine fein verteilte, gefällte Kieselsäure verwendet wird, die eine CTAB-Oberfläche (gemäß ASTM D 3765) von 30 bis 350 m²/g, bevorzugt von 110 bis 270 m²/g, besonders bevorzugt von 200 bis 270 m²/g, aufweist. Als Kieselsäuren können sowohl konventionelle Kieselsäuren wie die des Typs VN3 der Firma Evonik als auch hoch dispergierbare Kieselsäuren, so genannte HD-Kieselsäuren (z. B. Ultrasil^{®} 7000 der Firma Evonik), zum Einsatz kommen.

Die erfindungsgemäße Kautschukmischung enthält ein Gemisch aus mercapto-funktionalisierten Alkylalkoxysilanen und geblockten mercapto-funktionalisierten Alkylalkoxysilanen. Es könnnen dabei unterschiedlichste mercapto-funktionalisierten Alkylalkoxysilane eingesetzt werden. Die mercapto-funktionalisierten Alkylalkoxysilane weisen bevorzugt dabei die allgemeine Summenformel A-I)

Z-SiR¹R²R³ A-I)

auf
wobei die Reste R¹, R² und R³ gleich oder verschieden voneinander sein können und ausgewählt sind aus C₁-C₁₀-Alkoxygruppen,
und wobei Z entweder eine Gruppe ist, die eine Mercapto-Gruppen S-H aufweist (mercapto-funktionalisiertes Alkylalkoxysilan), oder eine Gruppe ist, die eine geblockte S-SG-Gruppierungen, wobei SG für Schutzgruppe steht, aufweist (geblocktes mercapto-funktionalisiertes Alkylalkoxysilan), sodass das Silan durch Reaktion der S-H-Gruppierung oder der S-SG-Gruppierung nach Entfernen der Schutzgruppe bei der Schwefelvulkanisation an Polymere anbinden kann.

Besonders bevorzugt im Hinblick auf den Rollwiderstand hat es sich erwiesen, wenn das Gemisch aus den Alkylalkoxysilanen 65 bis 80 Gew.-% 3-Octanoylthio-1-propyltriethoxysilan ( ≙ S-[3-(Triethoxysilyl)propyl]-octanthioat) und 20 bis 35 Gew.-% 3-Mercaptopropyltriethoxysilan ( ≙ γ-Mercaptopropyltriethoxysilan) enthält. Bei 3-Octanoylthio-1-propyltriethoxysilan handelt es sich um ein geblocktes mercapto-funktionalisiertes Alkylalkoxysilanen, bei 3-Mercaptopropyltriethoxysilan handelt es sich um ein mercapto-funktionalisiertes Alkylalkoxysilan.

Bevorzugt enthält das Gemisch aus den Alkylalkoxysilane als weiteres Alkylalkoxysilan 1 bis 2 Gew.-% Chloropropyltriethoxysilan.

Für ein gutes Verarbeitungsverhalten mit gut handhabbaren An- und Ausvulkanisationszeiten bei gleichzeitig guten Reifeneigenschaften enthält die Kautschukmischung 4 bis 12 phf eines Gemisches aus mercapto-funktionalisierten Alkylalkoxysilanen und geblockten mercapto-funktionalisierten Alkylalkoxysilanen.

Die in dieser Schrift verwendete Angabe phf (parts per hundred parts of filler by weight) ist dabei die in der Kautschukindustrie gebräuchliche Mengenangabe für Kupplungsagenzien für polare Füllstoffe. Im Rahmen der vorliegenden Anmeldung bezieht sich phf auf das vorhandene Kieselsäure/Silika, das heißt, dass andere eventuell vorhandene Füllstoffe wie Ruß nicht in die Berechnung der Menge an Silan-Kupplungsagens mit eingehen.

Gemäß einer besonders vorteilhaften Weiterbildung der Erfindung enthält die Kautschukmischung 4 bis 12 phf eines Gemisches aus 65 bis 80 Gew.-% 3-Octanoylthio-1-propyltriethoxysilan ( ≙ S-[3-(Triethoxysilyl)propyl]-octanthioat) und 20 bis 35 Gew.-% 3-Mercaptopropyltriethoxysilan ( ≙ γ-Mercaptopropyltriethoxysilan). Mit derartigen Mischungen konnten sehr gute Ergebnisse im Hinblick auf das Verarbeitungsverhalten und die Reifeneigenschaften Rissbeständigkeit und Rollwiderstand erzielt werden.

Für ein optimales Verhältnis von Rissbeständigkeit und Rollwiderstand hat es sich als vorteilhaft erwiesen, wenn die Kautschukmischung als Vulkanisationsbeschleuniger zumindest einen Mercaptobeschleuniger und einen Thiurambeschleuniger enthält. Als Mercaptobeschleuniger können z. B. 2-Mercaptobenzothaizol (MBT), Dibenzothiazyldisulfid (MBTS) und Zink-2-mercaptobenzothiazol (ZMBT) eingesetzt werden. Zu den Thiurambeschleunigern zählen beispielsweise Tetrabenzylthiuramdisulfid (TBzTD), Tetramethylthiuramdisulfid (TMTD), Tetraethylthiuramdisulfid (TETD) und Dipentamethylenthiuramtetrasulfid (DPTT). Vorzugsweise werden Dibenzothiazyldisulfid (MBTS) und Tetrabenzylthiuramdisulfid (TBzTD) eingesetzt. Diese Beschleuniger können in Kombination mit weiteren Vulkanisationsbeschleunigern ausgewählt aus der Gruppe bestehend aus Thiazolbeschleunigern, Sulfenamidbeschleunigern, Thiocarbamatbeschleunigern, Thiophosphatbeschleunigern, Thioharnstoffbeschleunigern, Xanthogenat-Beschleunigern, Guanidinen und Aldehydamine, eingesetzt werden.

Die erfindungsgemäße Kautschukmischung enthält vorzugsweise weniger als 0,5 phr, bevorzugt weniger als 0,1 phr, eines Vulkanisationsbeschleunigers ausgewählt aus der Gruppe der Guanidine und Aldehydamine.

Bei den Vulkanisationsbeschleunigern ausgewählt aus der Gruppe der Guanidine und Aldehydamine kann es sich z. B. um Diphenylguanidin, Di-o-tolylguanidin, o-Tolylbiguanidin, N,N'-diphenylguanidin, Hexamethylentetramin, Kondensationsprodukte homologer Acroleine mit aromatischen Basen oder Kondensationsprodukte von Aldehyden mit Aminen handeln.

Derartige Vulkanisationsbeschleuniger sind in der Mischung nur in sehr geringen Mengen oder gar nicht vorhanden.

Neben den bereits genannten Inhaltsstoffen kann die Kautschukmischung weitere Zuschlagstoffe enthalten, die im Folgenden genannt werden.

Die Kautschukmischung kann weitere Füllstoffe, wie Ruße, Alumosilicate, Kreide, Stärke, Magnesiumoxid, Titandioxid, Kautschukgele, Kohlenstoffnanoröhrchen, Graphit, Graphene oder sogenannte "carbon-silica dual-phase filler" in üblichen Mengen enthalten, wobei die Füllstoffe in Kombination eingesetzt werden können.

Ist in der Kautschukmischung Ruß enthalten, können alle dem Fachmann bekannten Ruß-Typen eingesetzt werden. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist. Hiermit werden für die Anwendung im Fahrzeugreifen besonders gute Rollwiderstandsindikatoren bei guten sonstigen Reifeneigenschaften erzielt.

Die erfindungsgemäße Kautschukmischung kann des Weiteren unterschiedliche Weichmacher enthalten. Diese sind bevorzugt in Mengen bis zu 70 phr in der Mischung enthalten.

Als Weichmacher können beispielsweise solche eingesetzt werden, die ausgewählt sind aus der Gruppe bestehend aus Weichmachern aus nachwachsenden Rohstoffen wie Rapsöl oder Sonnenblumenöl, Mineralölen, Phosphorsäureestern wie Tri-(2-ethylhexyl)phosphat, und Flüssig-Polymeren mit einem Gewichtsmittel der Molekulargewichtsverteilung Mw gemäß GPC von 60.000 g/mol oder weniger. Vorzugsweise werden DAE (Destillated Aromatic Extracts), RAE (Residual Aromatic Extract), TDAE (Treated Destillated Aromatic Extracts), MES (Mild Extracted Solvents), Rapsöl und/oder flüssige Dien-Polymere eingesetzt.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z. B. Zinkethylhexanoat,
c) Harze, wie z. B. Terpenharze,
d) Mastikationshilfsmittel, wie z. B. 2,2'-Dibenzamidodiphenyldisulfid (DBD), und
e) Verarbeitungshilfsmittel.

Der Mengenanteil der Gesamtmenge an weiteren Zusatzstoffen beträgt 3 bis 150 phr, bevorzugt 3 bis 100 phr und besonders bevorzugt 5 bis 80 phr.

Die Vulkanisation der Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern. Vorzugsweise werden, wie oben erwähnt, Mercaptobeschleuniger und Thiurambeschleuniger eingesetzt. Werden Vulkanisationsbeschleuniger aus der Gruppe der Guanidine und Aldehydamine eingesetzt, sollte gemäß einer vorteilhaften Ausgestaltung der Erfindung deren Menge 0,5 phr nicht überschreiten.

Außerdem kann die Kautschukmischung Vulkanisationsverzögerer enthalten.

Die Herstellung der Kautschukmischung erfolgt nach den in der Kautschukindustrie üblichen Verfahren, in dem in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die Kautschukmischung kann für unterschiedlichste Gummiprodukte eingesetzt werden.

Vorzugsweise wird sie in Fahrzeugreifen, insbesondere Fahrzeugluftreifen, eingesetzt, mit zumindest einem Bauteil, das aus der mit Schwefel vulkanisierten, erfindungsgemäßen Kautschukmischung besteht. Sie kann auch in mehreren unterschiedlichen Bauteilen von Fahrzeugreifen zum Einsatz kommen. Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Vorzugsweise handelt es sich um einen Fahrzeugluftreifen, wie PKW-, Van-, LKW- oder Zweiradreifen, mit Laufstreifen, dessen zumindest mit der Fahrbahn in Berührung kommender Teil aus der mit Schwefel vulkanisierten, erfindungsgemäßen Kautschukmischung besteht.

Bei einem Fahrzeugluftreifen kann der Laufstreifen aus einer einzigen Mischung bestehen, die gemäß der Erfindung ausgebildet ist. Häufig weisen Fahrzeugluftreifen heute jedoch einen Laufstreifen mit einer sogenannten Cap/Base-Konstruktion auf. Unter "Cap" wird dabei der mit der Fahrbahn in Berührung kommende Teil des Laufstreifens verstanden, der radial außen angeordnet ist (Laufstreifenoberteil oder Laufstreifencap). Unter "Base" wird dabei der Teil des Laufstreifens verstanden, der radial innen angeordnet ist, und somit im Fahrbetrieb nicht oder nur am Ende des Reifenlebens mit der Fahrbahn in Berührung kommt (Laufstreifenunterteil oder Laustreifenbase). Bei einem Fahrzeugluftreifen mit einer solchen Cap/Base-Konstruktion ist zumindest die Kautschukmischung für die Cap gemäß dem Anspruch 1 ausgebildet.

Der erfindungsgemäße Fahrzeugluftreifen kann auch einen Laufstreifen aufweisen, der aus verschiedenen nebeneinander und/oder untereinander angeordneten Laufstreifenmischungen besteht (Multikomponentenlaufstreifen).

Bei der Herstellung des Fahrzeugluftreifens wird die Mischung als Fertigmischung vor der Vulkanisation in die Form eines Laufstreifens, bevorzugt wenigstens in die Form einer Laufstreifencap, gebracht und bei der Herstellung des Fahrzeugreifenrohlings wie bekannt aufgebracht. Der Laufstreifen, bevorzugt wenigstens die Laufstreifencap, kann auch in Form eines schmalen Kautschukmischungsstreifens auf einen Reifenrohling aufgewickelt werden.

Die erfindungsgemäße Kautschukmischung ist ferner auch für andere Bauteile von Fahrzeugreifen geeignet, wie z. B. insbesondere dem Hornprofil, sowie für innere Reifenbauteile. Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet.

Von der Erfindung sind sämtliche vorteilhaften Ausgestaltungen, die sich unter anderem in den Patentansprüchen widerspiegeln, umfasst. Insbesondere sind von der Erfindung auch Ausgestaltungen umfasst, die sich durch Kombination unterschiedlicher Merkmale, beispielsweise von Bestandteilen der Kautschukmischung, unterschiedlicher Abstufungen bei der Bevorzugung dieser Merkmale ergeben, sodass auch eine Kombination eines ersten als "bevorzugt" bezeichneten Merkmals oder im Rahmen einer vorteilhaften Ausführungsform beschriebenen Merkmals mit einem weiteren als z. B. "besonders bevorzugt" bezeichneten Merkmal von der Erfindung erfasst ist.

Die Erfindung soll nun anhand von Vergleichs- und Ausführungsbeispielen, die in der Tabelle 1 zusammengefasst sind, näher erläutert werden.

Die Vergleichsmischung ist dabei mit V, die erfindungsgemäßen Mischungen sind mit E gekennzeichnet.

Die Mischungsherstellung erfolgte nach den in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde.

Aus sämtlichen Mischungen wurden Prüfkörper durch optimale Vulkanisation über 20 min unter Druck bei 160°C hergestellt und mit diesen Prüfkörpern für die Kautschukindustrie typischen Materialeigenschaften mit den im Folgenden angegebenen Testverfahren ermittelt:
- Shore-A-Härte bei Raumtemperatur gemäß ISO 868
- Rückprallelastizität bei Raumtemperatur und 70°C gemäß ISO 4662
- Zugfestigkeit bei Raumtemperatur gemäß ISO 37
- Verlustfaktor tan δ (10%) in Anlehnung an ASTM D6601 vom zweiten Dehnungssweep bei 1 Hz und 70°C)

Eine hohe Rückprallelastizität bei 70°C und ein geringer Verlustfaktor tan δ (10%) lassen auf einen niedrigen Rollwiderstand schließen. Eine hohe Zugfestigkeit korreliert bei Reifen mit einer guten Rissbeständigkeit.

**Tabelle 1**

| **Bestandteile** | **Einheit** | **1(V)** | **2(E)** | **3(E)** |
|---|---|---|---|---|
| Naturkautschuk | phr | 80 | 80 | 80 |
| SSBR^{a} | phr | 20 | 20 | 20 |
| Kieselsäure^{b} | phr | 50 | 50 | 50 |
| Verarbeitungshilfsmittel^{c} | phr | 3 | 3 | 3 |
| Alterungsschutzmittel | phr | 3,5 | 3,5 | 3,5 |
| Ozonschutzwachs | phr | 2,5 | 2,5 | 2,5 |
| Zinkoxid | phr | 1,5 | 1,5 | 1,5 |
| Stearinsäure | phr | 2,5 | 2,5 | 2,5 |
| Silankupplungagens^{d} | phr | 8 | - | - |
| Gemisch aus Alkylalkoxysilanen^{e} | phr | - | 8 | 8 |
| Dibenzothiazyldisulfid (MBTS) | phr | - | - | 0,3 |
| Tetrabenzylthiuramdisulfid | phr | - | 0,3 | 0,3 |
| Diphenylguanidin | phr | 0,5 | - | - |
| N-Cyclohexyl-2-benzothiazolsulfenamid | phr | 1,1 | 1,1 | 1,1 |
| Schwefel | phr | 2 | 2 | 2 |

| **Eigenschaften** | **Einheit** | **1(V)** | **2(E)** | **3(E)** |
|---|---|---|---|---|
| Shorehärte bei RT | ShA | 61,3 | 64,2 | 64,8 |
| Rückprallelast. RT | % | 47,6 | 52,7 | 52,1 |
| Rückprallelast. 70°C | % | 59,6 | 65,4 | 66,4 |
| Zugfestigkeit RT | MPa | 18,6 | 23,2 | 22,1 |
| tan δ (10%) bei 70 °C | - | 0,118 | 0,111 | 0,103 |

| | | | | |
|---|---|---|---|---|
| ^{a} Sprintan^{®} SLR-3402, Trinseo, funktionalisiertes, lösungspolymerisiertes Styrol-Butadien-Copolymer mit Funktionalisierung für die Polymer/Kieselsäure- und die Polymer/Ruß-Wechselwirkung, T_{g} = -59 °C ^{b} Premium SW, Solvay S.A., BET-Oberfläche = 270 m²/g (gemessen mit Stickstoff), CTAB-Oberfläche = 245 m²/g; ^{c} Struktol^{®} EF 44, Schill+Seilacher (Mischung aus Fettsäurederivaten (hauptsächlich Zinkseifen)) ^{d} 3-Octanoylthio-1-propyltriethoxysilan (geblocktes Mercaptosilan), NXT^{™}, Momentive ^{e} Gemisch enthaltend 71,5 Gew.-% 3-Octanoylthio-1-propyltriethoxysilan, 25,8 Gew.-% 3-Mercaptopropyltriethoxysilan und 1,4 Gew.-% Chloropropyltriethoxysilan und 1,3 Gew.-% weiterer Alkyalkoxysilane | | | | |

Aus den Daten der Tabelle 1 wird ersichtlich, dass durch den Einsatz eines Gemisches aus den speziellen Alkylalkoxysilanen in kieselsäurehaltigen Mischungen mit einem hohen Anteil an natürlichem Polyisopren überraschenderweise sowohl der Verlustfaktor tan δ (10%) verringert als auch die Zugfestigkeit erhöht werden kann, was auf ein deutlich verbessertes Eigenschaftsprofil im Hinblick auf Rollwiderstand und Rissbeständigkeit (und damit auch Haltbarkeit) bei Verwendung in Reifen schließen lässt.

Ein besonders gutes Verhältnis von Rollwiderstand und Rissbeständigkeit bei gleichzeitig gutem Verarbeitungsverhalten lässt sich erzielen, wenn gemäß Mischung 3(E) Dibenzothiazyldisulfid (MBTS) und Tetrabenzylthiuramdisulfid (TBzTD) als Vulkanisationsbeschleuniger eingesetzt werden und auf Vulkanisationsbeschleuniger aus der Gruppe der Guanidine und Aldehydamine verzichtet wird.

## Patentansprüche

1. Schwefelvernetzbare Kautschukmischung, enthaltend
- 50 bis 100 phr zumindest eines natürlichen Polyisoprens,
- 0 bis 50 phr zumindest eines weiteren Dienkautschuks,
- 10 bis 500 phr Kieselsäure und
- ein Gemisch aus mercapto-funktionalisierten Alkylalkoxysilanen und geblockten mercapto-funktionalisierten Alkylalkoxysilanen.

2. Schwefelvernetzbare Kautschukmischung nach Anspruch 1, **dadurch gekennzeichnet, dass** sie 60 bis 90 phr zumindest eines natürlichen Polyisoprens und 10 bis 40 phr zumindest eines weiteren Dienkautschuks enthält.

3. Schwefelvernetzbare Kautschukmischung nach Anspruch 1 oder 2, **dadurch gekennzeichnet, dass** der oder die weiteren Dienkautschuk(e) ausgewählt ist bzw. sind aus der Gruppe bestehend aus synthetischem Polyisopren (IR), Butadien-Kautschuk (BR), lösungspolymerisiertem Styrol-Butadien-Kautschuk (SSBR), emulsionspolymerisiertem Styrol-Butadien-Kautschuk (ESBR), Butylkautschuk (IIR) und Halobutylkautschuk.

4. Schwefelvernetzbare Kautschukmischung zumindest einem der vorherigen Ansprüche, **dadurch gekennzeichnet, dass** sie 50 bis 200 phr Kieselsäure enthält.

5. Schwefelvernetzbare Kautschukmischung nach zumindest einem der vorherigen Ansprüche, **dadurch gekennzeichnet** das Gemisch aus den Alkylalkoxysilanen 65 bis 80 Gew.-% 3-Octanoylthio-1-propyltriethoxysilan und 20 bis 35 Gew.-% 3-Mercaptopropyltriethoxysilan enthält.

6. Schwefelvernetzbare Kautschukmischung nach Anspruch 4, **dadurch gekennzeichnet, dass** das Gemisch aus den Alkylalkoxysilane als weiteres Alkylalkoxysilan 1 bis 2 Gew.-% Chloropropyltriethoxysilan enthält.

7. Schwefelvernetzbare Kautschukmischung nach zumindest einem der vorherigen Ansprüche, **dadurch gekennzeichnet, dass** sie 4 bis 12 phf eines Gemisches aus mercapto-funktionalisierten Alkylalkoxysilanen und geblockten mercapto-funktionalisierten Alkylalkoxysilanen enthält.

8. Schwefelvernetzbare Kautschukmischung Anspruch 6, **dadurch gekennzeichnet, dass** sie 4 bis 12 phf eines Gemisches aus 65 bis 80 Gew.-% 3-Octanoylthio-1-propyltriethoxysilan und 20 bis 35 Gew.-% 3-Mercaptopropyltriethoxysilan enthält.

9. Schwefelvernetzbare Kautschukmischung nach zumindest einem der vorherigen Ansprüche, **dadurch gekennzeichnet, dass** sie als Vulkanisationsbeschleuniger zumindest einen Mercaptobeschleuniger und einen Thiurambeschleuniger enthält.

10. Schwefelvernetzbare Kautschukmischung nach Anspruch 9, **dadurch gekennzeichnet, dass** sie als Vulkanisationsbeschleuniger Dibenzothiazyldisulfid (MBTS) und Tetrabenzylthiuramdisulfid (TBzTD) enthält.

11. Schwefelvernetzbare Kautschukmischung nach zumindest einem der vorherigen Ansprüche, **dadurch gekennzeichnet, dass** sie weniger als 0,5 phr eines Vulkanisationsbeschleunigers ausgewählt aus der Gruppe der Guanidine und Aldehydamine enthält.

12. Schwefelvernetzbare Kautschukmischung nach Anspruch 11, **dadurch gekennzeichnet, dass** sie weniger als 0,1 phr eines Vulkanisationsbeschleunigers ausgewählt aus der Gruppe der Guanidine und Aldehydamine enthält.

13. Fahrzeugreifen, insbesondere Fahrzeugluftreifen, mit zumindest einem Bauteil, das aus einer mit Schwefel vulkanisierten Kautschukmischung nach einem der Ansprüche 1 bis 12 besteht.

14. Fahrzeugluftreifen nach Anspruch 13 mit einem Laufstreifen, dessen zumindest mit der Fahrbahn in Berührung kommender Teil aus einer mit Schwefel vulkanisierten Kautschukmischung nach einem der Ansprüche 1 bis 12 besteht.
